# EUROPEAN PATENT APPLICATION

(11) **EP 4 203 119 A1**
(43) Date of publication of application: **28.06.2023**
(21) Application number: 21306926.3
(22) Date of filing: 23.12.2021
(51) Int. Cl.: H01M 8/16

(54) **ELECTRONIC DEVICE OF A BIOFUEL CELL AND A PRINTED CIRCUIT BOARD**

(71) Applicant: BeFC, 38000 Grenoble (FR)
(72) Inventor: BERTHUEL, Marie, 38610 GIERES (FR); SERGEJEVS, Aleksandrs, 38610 GIERES (FR); BLOCH, Jean-Francis, 38610 GIERES (FR); HAMMOND, Jules, 38610 GIERES (FR); SOLAN, Sébastien, 38400 SAINT-MARTIN-D'HERES (FR)
(74) Representative: Novagraaf Technologies

(57) **Abstract**

The present invention concerns an electronic device comprising a biofuel cell and a printed circuit board (PCB) with an aperture, the biofuel cell comprising a gas diffusion layer (GDL) air breathing aperture, the electronic device being characterized in that the aperture formed into the PCB is opposite the GDL air breathing aperture, the biofuel cell being attached to the PCB.

## Description

### Technical field of the invention

The present invention concerns an electronic device comprising a biofuel cell and a printed circuit board (PCB) with a hole/aperture, the biofuel cell comprising a gas diffusion layer (GDL) air breathing aperture, the electronic device being characterized in that an aperture is formed into the PCB opposite the GDL air breathing aperture, the biofuel cell being attached to the PCB

In the description below, references in square brackets ([ ]) refer to the list of references at the end of the text.

### State of the art

Biological fuel cells (or biofuel cells) offer an attractive means to provide eco-friendly and sustainable power to electronic devices, particularly for small portable devices for applications such as healthcare, environmental monitoring, bio-defense, etc. Given that enzyme-based fuel cells can operate using substrates that are abundant in the biological fluids and environmental effluent (*i.e.,* glucose and oxygen) whilst exhibiting power densities that are often superior to microbial fuel cells, they offer an attractive proposition to augment or self-power miniaturised wearable or implantable devices [1,2,3]. Furthermore, paper-based devices are gaining popularity as propositions for these types of applications owing to their low mass, small form factor and flexibility, allowing them to conform to a range of different surfaces.

It is well documented that the current density at the cathode is one of the limiting factors in biological fuel cell performances where oxidoreductase enzymes are used within one of the two half-cell reactions, and this is largely due to the lower concentration of dissolved oxygen available at the electrodesolution interface. It is therefore often advantageous to increase the amount of oxygen at the cathode surface, for example by optimizing its morphology to expose part of the cathode to air [4,5,6]. Such devices are commonly referred to as having an 'air breathing' cathode.

Whilst increasing the availability of oxygen is important to improve global performance of an oxygen-based fuel cell, it is also important to maintain enough liquid, which is required to provide transport of ionic species, often in the form of an electrolyte. Simply providing an open aperture can lead to the fuel cell drying, ceasing the ability for the reactions to ensue.

Therefore, a membrane which supports the flux of oxygen whilst limiting the loss of liquid is typically implemented. Gas diffusion layers (GDLs), made often of carbon, are frequently employed as they can double as an electrical current collector. Carbon-based GDLs are porous materials composed of a dense array of carbon fibers, which may also be modified with other carbon micro-/nano-structures. This structure provides intrinsic hydrophobicity, reducing loss of liquid, but may also be further treated (e.g., inclusion of PTFE) to increase hydrophobicity.

As aforementioned, one of the main factors reducing the operational lifetime is the loss of liquid within the fuel cell. It is therefore interesting to increase the available volume of liquid within the device. If a constant/continuous supply of liquid cannot be provided (for instance where a body could provide a steady supply of biological fluid), one option, particularly for miniaturized, single-use devices, is to provide a liquid reservoir [7] in order to provide a mechanism to maintain wetting of the interfaces.

However, this liquid reservoir will naturally occupy a volume. In many applications (wearable health/medical patches, packaging), it is interesting to provide a thin, flexible, and conformable biofuel cell. In these instances, it is interesting the reduce the overall thickness of the device. Naturally, by reducing the thickness of the device (z-axis), the volume must be spread across the plane of the device (xy axes). By occupying the full extent of the x-y plane, the total thickness can be minimized. The consequence of this technique, is that this surface cannot be used to provide an aperture for the provision of an air-breathing cathode, particularly when the optimum location for the aperture is in the center of the active area (center of electrode) of the device.

Assuming a thin biofuel cell (whereby the thickness is so minute that we can consider two flat surfaces surrounded by edges that pose no functional surfaces for design, a 2D structure rather than a 3D structure), if one surface is occupied by the liquid reservoir, the other surface must be used for all other function. Functionality would typically include the provision of electrical terminals (anode and cathode), as well as an aperture for the flux of air (for oxygen provision) to provide air-breathing capability.

Looking at the attachment of such an embodiment to an electronic device, conductive films (such as a singular anisotropic conductive film (ACF) or multiple isotropic conductive films (ICF) are championed due to their low cost, low thickness (typically less than 100 micron), and ability to be used in mass production (such as roll-to-roll processing), otherwise surface mount technology (SMT) ribbon cable connectors may be employed for reusable applications. In either case, the biofuel cell would be brought into close proximity (< 200 micron) with the electronic device, which would usually be larger than the contact pads used to connect the electrical terminals of the biofuel cell and the electronic device, therefore providing a high probability of blocking the air-breathing cathode because of the electronic device.

Thus biofuel cells are usually made as standalone devices, or they are made as a part of a PCB. Indeed combination of a standalone biofuel cell with a functional PCB presents some challenges such as delivery of oxygen to the cathode of the fuel cell through the PCB for example. Furthermore, combination of a biofuel cell with a functional PCB requires spatial constraint and specific arrangement e.g. the place for the contact pads, the place for the inlet, the electronic component, the location of the sensors, etc....

Thus there is still a need to provide a novel electronic device combining a biofuel cell with a functional PCB, that does not have the disadvantages of the prior art devices.

### Description of the invention

Therefore the Inventors solved the technical problem by providing an electronic device comprising a biofuel cell (International Application WO 2019/234573) [7] and a hollow printed circuit board (PCB) having an aperture formed opposite the GDL air breathing aperture of the biofuel cell attached to the PCB, with the purpose to solve the problems of :
- providing a clear flux of air to the air-breathing area of the biofuel cell (when one surface is occupied by a liquid reservoir, and the other is blocked by the PCB the fuel cell is attached to) by using an air-breathing design including an aperture on one (or more) side, covered by a gas diffusion layer (GDL) ;
- reducing loss of liquid from the biofuel cell by using a GDL for its hydrophobicity and a liquid reservoir to ensure there is sufficient liquid to maintain operation, and that may also limit evaporation ;
- reducing thickness of the biofuel cell since the included liquid reservoir occupies the maximum extent of one of the surfaces ;
therefore improving cathodic current density, and hence full biofuel cell performance by about 2.5-fold.

In other words, the claimed electronic device maximizes the flux of air available for an oxygen reduction reaction, whilst providing a maximum volume of liquid to improve longevity as well as minimum overall thickness of the solution. The glucose-oxygen biofuel cell consists of two carbon electrodes functionalized by different enzymes for the oxidation of glucose (e.g., glucose oxidase or glucose dehydrogenase), and reduction of oxygen (e.g., laccase or bilirubin oxidase), with a cellulose separator, a gas diffusion layer (GLD) (to provide current collection and flux of oxygen/air) at the biocathode, and encapsulated by a robust cellulose paper (water proof, grease proof, and heat proof) that includes apertures for electrical contacts, flux of oxygen/air, and a liquid inlet, bonded with a liquid reservoir to provide increased longevity by reducing the time taken for the liquid to be lost via the gas diffusion layer. Thus the current technology of said biofuel cell is based on 7 layers: External layer; Current collector (carbon felt; e.g. from Panasonic EYGS, sgl carbon, ProGraphiteShop); Anode (nanotube felt with mediators and enzymes; e.g. from DSM, SHIN NIHON CHEMICAL, Sigma Aldrich); Microfluidic layer (cellulosic paper; e.g. from VWR European, Ahlstrom Munksjo); Cathode (nanotube felt with promoter and enzymes; e.g. from Creative enzymes, Sigma Aldrich); Current collector and gas diffusion layer (GDL, ideally with MPL) (hydrophobic carbon felt; e.g. from sgl carbon, FuelCellStore); then External layer. In turn, the paper biofuel cell with liquid reservoir is then attached to a PCB which includes an aperture aligned to the aperture into the biofuel cell providing flux of oxygen/air.

Regarding the association/combination of a biofuel cell powering an ultralow/low power functional portable electronic platform, composed of electronic components including, but not limited to, sensors, microprocessors, and/or communication modules, the use of at least one aperture through the PCB has never been used for improving the energy generation from a biofuel cell associated with a functional PCB.

An object of the present invention is therefore an electronic device comprising a biofuel cell and a printed circuit board (PCB) with an aperture (or hole), the biofuel cell comprising a gas diffusion layer (GDL) air breathing aperture, the electronic device being characterized in that the aperture formed into the PCB is opposite the GDL air breathing aperture, the biofuel cell being attached to the PCB.

According to a particular embodiment of the present invention, the aperture into the PCB is at least one hole.

According to a particular embodiment of the present invention, the aperture into the PCB has an area from 1/10 to 2 times the GDL air breathing aperture of the biofuel cell.

According to a particular embodiment of the present invention, the aperture into the PCB is equipped with a material that is permeable to the oxygen. For example, the material is in the form selected from the group consisting of a grid, and a membrane.

According to a particular embodiment of the present invention, the aperture into the PCB is in the form of a plurality of contiguous holes made in the PCB itself, the said holes together forming a grid opposite the GDL air breathing aperture of the biofuel cell.

According to a particular embodiment of the present invention, the biofuel cell is attached to the PCB by an ACF (Anisotropic Conductive Film) tape, by a Teflon tape (e.g. from Techniflon) or by any biodegradable or lowest environmental impact means (e.g. a biodegradable adhesive such as paper tape or water-dissolving tape, e.g. from Adhesives Research) or by a snap-fit means.

According to a particular embodiment of the present invention, the snap-fit means comprises at least one spur formed either onto the surface of the biofuel cell in contact with the surface of the PCB or onto the surface of the PCB in contact with the surface of the biofuel cell, and at least one slot complementary to said at least one spur formed either onto the surface of the PCB in contact with the surface of the biofuel cell or onto the surface of the biofuel cell in contact with the surface of the PCB, respectively, such that the said at least one spur slots into the said at least one slot to attach thereby the biofuel cell to the PCB. Preferably, the said at least one spur and the said at least one slot surrounds the (GDL) air breathing aperture of the biofuel cell and the aperture formed into the PCB, while the aperture formed into the PCB is opposite the GDL air breathing aperture of the biofuel cell.

According to a particular embodiment of the present invention, the snap-fit means comprises several spurs formed either onto the surface of the biofuel cell in contact with the surface of the PCB or onto the surface of the PCB in contact with the surface of the biofuel cell, and several slots complementary to said several spurs formed either onto the surface of the PCB in contact with the surface of the biofuel cell or onto the surface of the biofuel cell in contact with the surface of the PCB, respectively, such that the said several spurs slot into the said several complementary slots to attach thereby the biofuel cell to the PCB. Preferably, the said several spurs and the said several slots surround the (GDL) air breathing aperture of the biofuel cell and the aperture formed into the PCB, while the aperture formed into the PCB is opposite the GDL air breathing aperture of the biofuel cell.

According to a particular embodiment of the present invention, the biofuel cell is an enzymatic fuel cell.

According to a particular embodiment of the present invention, the PCB is composed of different electronic components. For example, the PCB comprises sensors, microprocessors, user interactions, communication modules, etc... or a combination thereof.

### Brief description of the figures

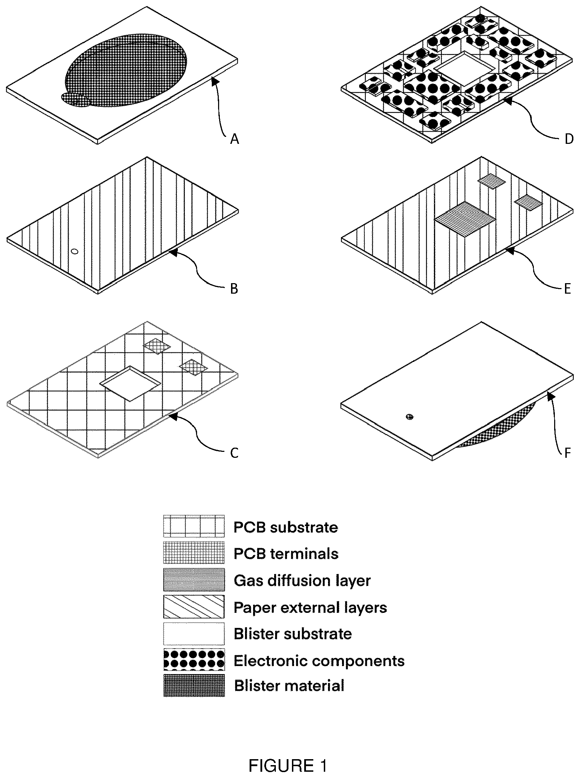

Figure 1 represents an electronic device of the present invention resulting from the attachment of an enzymatic fuel cell to a functional printed circuit board (PCB) with an aperture opposite the GDL air breathing aperture of the enzymatic fuel cell.

### EXAMPLES

### EXAMPLE 1 : PCB manufacturing

Material for film substrate: Polyimide (PI) or similar polymer, Polyester (PET), Polyethylene naphthalate (PEN), PTFE, Aramid. There are approximately 2000 additional plastic film categories which can be potentially suitable for the Flexible PCB manufacturing.

FPCBs (Flexible Printed Circuit Boards) usually consist of 3 layers: substrate, adhesive and copper foil. Adhesive reduces the FPCB performance, both electrical and mechanical, therefore 2-layer FPCBs with no adhesive exist. Methods of manufacturing the 2-layer FPCBs include electroplating, film coating and lamination. Electroplating is usually used for small scale cheaper boards, film coating is better for low cost mass production and lamination is usually used for double-sided FPCB manufacturing. Since all our boards are double sided, they are most likely manufactured using the lamination process.

Manufacturing process steps:
- Material selection. This step may not be a part of every manufacturer's process. Some boards require thicker copper layers. Materials with different copper layer thicknesses can be selected at this stage, or the sheets with the thinnest copper layers can be used and the additional copper can be added at a later step.
- Chemical pre-cleaning of materials. This step makes sure the copper coated substate sheets are free of oxide film and any other potential pollutants.
- Photoresist layer application. Application of a thin layer of the photoresist material that is to be selectively removed at the next step.
- Material exposure to UV light to transfer the layout onto the material. For double sided boards both sides of the materials can be exposed to the UV at the same time, or each side can be exposed in order
- Chemical etching. This removes the copper based on the layout transferred onto the material in the previous step.
- Drilling (for boards with more than one layer). Holes (vias) are used to connect the contact points between individual layers. These need to be drilled based on the supplied design files.
- Copper plating. As the copper layers are separated by an insulating substrate, conductive material needs to be added into the vias so they can make an electrical contact between the different layers. This is done via electrolytic copper plating. Another goal achieved by this step is increasing the thickness of the copper layer if required.
- Surface finish application. Surface finish protects the exposed copper from oxidation and corrosion. There are different surface finishes, such as HASL (Hot Air Solder Levelling), Tin, Silver, Gold or what is called Organic Coating.
- Coverlay application and lamination. This material is added to both protect the copper from oxidizing and also provide physical barriers between exposed parts of the copper (pads). This barrier prevents the molten solder (during reflow soldering at the last stage of final product assembly) from crossing between the pads and creating unwanted electrical connections. Coverlay can be almost any colour, in our designs we use black coverlay. After application, the heat, pressure and vacuum are used to adhere the coverlay material to the boards.
- Stiffener application (if applicable). Some FPCBs require certain areas to be rigid while leaving the rest of the board flexible. This is done by reinforcing these areas with a stiffener material (usually FR4) added onto one of the sides (or both) of the FPCB (as per design files). The thickness of this material is also selectable at the design stage.
- Silkscreen printing (if applicable). Silkscreen is the graphical layer that can printed on the external layers of the FPCB. The purpose of this layer is to provide visual information such as board name, version, component names and positions, show logos, serial numbers, display CE or RoHS compliance markings, or even give instructions to the end user on how to use the product. This layer can have both graphics and text, none of which can overlay with the exposed parts of the board (pads).
- Electrical test. At this stage the connectivity between the different points on the PCB is tested to make sure there were no issues during the manufacturing process.
- Cutting. At this step the PCBs are cut from their panels (if requested by customer) or cut in such a way that they are only held to the panels by small tabs to facilitate their removal from the panel later. This is the step where any additional holes (such as an air breathing and inlet holes in our case) would be cut. The cutting is done via any applicable method, such as laser cutting, mechanical routing, or for the large scale production die cutting.

All of the above steps are applicable to standard PCBs as well as Flex PCBs with some adjustments to some of the steps. In our case it does not matter if me use a standard rigid PCB or the Flex PCB, the holes for the air, blister and inlet would need to be cut anyway. The biggest difference would be during the cutting step as it is harder to cut the rigid PCB with a die due to its thickness, so laser or more realistically mechanical routing techniques would be used.

Same is applicable to the PCBs with more than 2 layers. In this case they are produced as separate PCBs, but prior to copper plating step they would be bonded together to make up a single board with internal layers. For example, for a 4-layer board two 2-layer boards would be made, then an insulator would be applied to one side of one of the boards and the other one would be glued on top of it. A result would be a board with 2 external and 2 internal layers, connections between layers would be done with the help of vias (which need to be plated, hence this happens before the plating step.

For our purposes the shape and dimensions of the boards are arbitrary as we do adjust their shape and size based on the application. In addition, we also do put the components on both sides of the boards for some use cases.

### EXAMPLE 2 : Biofuel cell manufacturing

### Anodes/cathodes

The device for the production of electrical energy comprises an anode and a cathode. In order to ensure the redox reaction allowing the production of electrical energy, the anode and cathode are made of materials allowing ion exchange. The anode and cathode must have specific properties (thickness, conductivity, surface resistance), chosen according to the application. These elements can be impregnated with enzymes and mediators.

For example the anode and cathode comprise nanotube sheets, and in particular sheets composed of multi-walled carbon nanotubes (MWNT) as described above. In the case of glucose batteries, the nanotube sheet is impregnated with mediators and enzymes that enable the oxidation of glucose at the anode and the reduction of oxygen from the air to water at the anode. For example, the anode may comprise the enzyme glucose oxidase and/or FAD dehydrogenase for the oxidation of glucose as well as naphthoquinone and/or phenathrolinequinone as a redox mediator transferring electrons to the electrode! The cathode may include the enzyme laccase, bilirubin oxidase and ABTS as mediators.

### Micro fluidic layer

A microfluidic diffusion layer is placed between the anode and the cathode. The latter allows the diffusion of a solution triggering the production of electrical energy by redox between the anode and the cathode. The microfluidic layer can, for example, be a simple gap or, more advantageously, comprise or consist of a paper-like material in which the solution triggering redox can diffuse by capillarity. A compromise must be made between its thickness and its cellular capacity (volume of the voids).

This layer forms a separating layer between the anode and the cathode and can also constitute, at least partially, the diffusion support of the electrolyte.

### Gaz diffusion layer/curent collectors

The device for producing electrical energy can also include the usual elements of electrochemical cells and in particular of fuel cells. Thus, the device may comprise conductive elements in contact with an anode (in particular on the opposite side of the anode face in contact with the microfluidic layer).

When the device is supplied with a gas, means of diffusion of this gas (GDL) are arranged to allow the supply of the gas.

### External layer

Finally, the electrical energy production device can comprise a support, preferably quite rigid, and a covering element (blister, liquid reservoir, protective materials), for example a glass fiber, plastic or polystyrene band, or preferably a biosourced material, surrounding all the elements described above, with the exception of the reservoir, which is accessible in order to be able to release its contents. The purpose of this element is to secure and protect the device.

The resulting electronic device is represented in Figure 1.

Figure 1 is the graphical representation (top and reverse views) of an enzymatic fuel cell (B,E) attached to a functional PCB (C,D) and covered by a blister (or liquid reservoir), mounted on a substrate (A,F). The top view (left column) shows the blister attached to its substrate (A), itself mounted on the back of the enzymatic fuel cell (B). The last layer of the device is a functional PCB, populated by electronic components, two contact terminals/pads and an aperture opposite the GDL air breathing aperture of the biofuel cell (C). The reversed view (right column) shows the functional PCB, populated by electronic components, with an aperture opposite the GDL air breathing aperture of the biofuel cell (E) itself mounted on the back of a blister attached to his substrate (F).

### List of references

[1] P. Atanassov, M. Y. El-Naggar, S. Cosnier and U. Schröder, ChemElectroChem, 2014, 1, 1702-1704.
[2] E. Katz and K. MacVittie, Energy Environ. Sci., 2013, 6, 2791.
[3] S. Cosnier, A. J. Gross, A. Le Goff and M. Holzinger, J. Power Sources, 2016, 325, 252-263.
[4] P. Manoj Kumar and A. K. Kolar, Int. J. Hydrogen Energy, 2010, 35, 671-681.
[5] P. Ferreira-Aparicio and A. M. Chaparro, Int. J. Hydrogen Energy, 2014, 39, 3997-4004.
[6] Z. Xiong, S. Liao, S. Hou, H. Zou, D. Dang, X. Tian, H. Nan, T. Shu and L. Du, Int. J. Hydrogen Energy, 2016, 41, 9191-9196.
[7] International Application WO 2019/234573

## Claims

1. Electronic device comprising a biofuel cell and a printed circuit board (PCB) with an aperture, the biofuel cell comprising a gas diffusion layer (GDL) air breathing aperture, the electronic device being **characterized in that** the aperture formed into the PCB is opposite the GDL air breathing aperture, the biofuel cell being attached to the PCB.

2. The electronic device according to claim 1, wherein the aperture into the PCB is at least one hole.

3. The electronic device according to either claim 1 or 2, wherein the aperture into the PCB has an area from 1/10 to 2 times the GDL air breathing aperture of the biofuel cell.

4. The electronic device according to any of claims 1 to 3, wherein the aperture into the PCB is equipped with a material that is permeable to the oxygen.

5. The electronic device according to claim 4, wherein the material is in the form selected from the group consisting of a grid and a membrane.

6. The electronic device according to any of claims 1 to 5, wherein the aperture into the PCB is in the form of a plurality of contiguous holes made in the PCB itself, the said holes together forming a grid opposite the GDL air breathing aperture of the biofuel cell.

7. The electronic device according to any of claims 1 to 6, wherein the biofuel cell is attached to the PCB by ACF tape or by a biodegradable or lowest environmental impact means.

8. The electronic device of claim 7, wherein the biodegradable or lowest impact means is a biodegradable adhesive and/or a snap-fit means.

9. The electronic device of claim 8, wherein the snap-fit means comprises at least one spur formed either onto the surface of the biofuel cell in contact with the surface of the PCB or onto the surface of the PCB in contact with the surface of the biofuel cell, and at least one slot complementary to said at least one spur formed either onto the surface of the PCB in contact with the surface of the biofuel cell or onto the surface of the biofuel cell in contact with the surface of the PCB, respectively, such that the said at least one spur slots into the said at least one slot to attach thereby the biofuel cell to the PCB.

10. The electronic device of claim 9, wherein the said at least one spur and the said at least one slot surrounds the (GDL) air breathing aperture of the biofuel cell and the aperture formed into the PCB, while the aperture formed into the PCB is opposite the GDL air breathing aperture of the biofuel cell.

11. The electronic device of claim 8, wherein the snap-fit means comprises several spurs formed either onto the surface of the biofuel cell in contact with the surface of the PCB or onto the surface of the PCB in contact with the surface of the biofuel cell, and several slots complementary to said several spurs formed either onto the surface of the PCB in contact with the surface of the biofuel cell or onto the surface of the biofuel cell in contact with the surface of the PCB, respectively, such that the said several spurs slot into the said several complementary slots to attach thereby the biofuel cell to the PCB.

12. The electronic device of claim 11, wherein the said several spurs and the said several slots surround the (GDL) air breathing aperture of the biofuel cell and the aperture formed into the PCB, while the aperture formed into the PCB is opposite the GDL air breathing aperture of the biofuel cell.

13. The electronic device according to any of claims 1 to 12, wherein the biofuel cell is an enzymatic fuel cell.
